# EUROPÄISCHE PATENTSCHRIFT

(11) **EP 4 478 389 B1**
(45) Veröffentlichungstag und Bekanntmachung des Hinweises auf die Patenterteilung: **09.09.2026**
(21) Anmeldenummer: 23179838.0
(22) Anmeldetag: 16.06.2023
(51) Int. Cl.: H01H 37/76, H01T 1/12, H01T 1/14

(54) **BAUGRUPPE FÜR DEN POTENZIALAUSGLEICH IN EXPLOSIONSGEFÄHRDETEN BEREICHEN**
ASSEMBLY FOR POTENTIAL EQUALISATION IN EXPLOSIVE AREAS
ENSEMBLE DE COMPENSATION DE POTENTIEL DANS DES ZONES À RISQUE D'EXPLOSION

(43) Veröffentlichungstag der Anmeldung: 18.12.2024
(73) Patentinhaber: DEHN SE, 92318 Neumarkt i.d. OPf. (DE)
(72) Erfinder: BÖHM, Thomas, 92318 Neumarkt i.d.OPf. (DE); DAUM, Richard, 92318 Neumarkt i.d.OPf. (DE); WAFFLER, Michael, 92318 Neumarkt i.d.OPf. (DE); MEIER, Dominik, 92318 Neumarkt i.d.OPf. (DE); LANG, Christian, 92318 Neumarkt i.d.OPf. (DE)
(74) Vertreter: Prinz & Partner mbB

(56) Entgegenhaltungen:
- WO-A1-2019/220171
- DE-A1- 2 740 695
- DE-B3- 102014 016 938
- DE-U1- 202013 002 222

## Beschreibung

Aus dem Stand der Technik sind Baugruppen für den Potenzialausgleich in explosionsgefährdeten Bereichen (Ex-Bereiche) bekannt, die für den Blitzschutz vorgesehen sind.

Die entsprechenden Baugruppen werden üblicherweise zur Überbrückung von Isolierstücken, Isolierflanschen oder ähnlichem verwendet, sodass ansonsten voneinander isolierte Anlagenteile einer Anlage bei Blitzeinwirkung geerdet sind, wodurch Beschädigungen aufgrund von Blitzeinwirkung wirkungsvoll vermieden werden können. Ein Beispiel einer solchen Baugruppe ist die EXFS100 der Dehn SE.

Neben der typischen Funktion einer solchen Baugruppe, nämlich eine elektrische Leitung bei Blitzeinwirkung sicherzustellen, muss eine solche Baugruppe auch in der Lage sein, im Defektfall einen Kurzschluss zu erzeugen, sodass die Baugruppe im Defektfall elektrisch leitend ist, wodurch die ansonsten voneinander isolierten Anlagenteile der Anlage dauerhaft geerdet sind.

Es hat sich bei derartigen Baugruppen herausgestellt, dass es für einen Nutzer nicht ohne Weiteres ersichtlich ist, ob die Baugruppe noch voll funktionsfähig ist oder ob ein Defektfall vorliegt und die Baugruppe dauerhaft kurzgeschlossen ist.

Wie vorstehend bereits erläutert, sind die Baugruppen so ausgebildet, dass im Defektfall ein Kurzschluss erzeugt wird. Ob dies tatsächlich der Fall ist, ist für den Nutzer jedoch nicht ohne Weiteres ersichtlich. Auch muss sich der Nutzer darauf verlassen, dass die Baugruppe im Defektfall insoweit funktionsfähig ist, dass der Kurzschluss über die Baugruppe im Defektfall der Baugruppe auch tatsächlich vorliegt. Daher muss mit einigem Aufwand bei derartigen Baugruppen sichergestellt werden, dass ein Kurzschluss im Defektfall tatsächlich erzeugt wird, um die ansonsten voneinander isolierten Anlagenteile im Defektfall zu erden.

Aus der DE 10 2014 016938 B3 ist eine Baugruppe für den Potenzialausgleich bekannt, die einen Gasableiter sowie einen Varistor umfasst, wobei ein Opferelement vorgesehen ist, das seine mechanische Stabilität bei einer thermischen Belastung verliert, sodass das Opferelement verformt werden kann.

Die DE 20 2013 002222 U1 zeigt eine Überspannungsschutzeinrichtung, die eine Kurzschlussfunktion sowie eine Zustandsanzeige aufweist.

Aus der WO 2019 / 220171 A1 ist ein Spannungsbegrenzer mit einer Kurzschlussvorrichtung bekannt.

Die DE 27 40 695 A1 zeigt eine Funkenstreckenabsicherung.

Die Aufgabe der Erfindung ist es, die Funktionsfähigkeit einer derartigen Baugruppe zu verbessern, also die Baugruppe einfacher und kostengünstiger auszugestalten, und gleichzeitig die Nutzerfreundlichkeit zu erhöhen.

Die Aufgabe wird erfindungsgemäß gelöst durch eine Baugruppe für den Potenzialausgleich in explosionsgefährdeten gemäß dem unabhängigen Patentanspruch 1.

Der Grundgedanke der Erfindung ist es, die Baugruppe für den Potenzialausgleich mit einer Kurzschlussvorrichtung zu versehen, die insbesondere im Defektfall der Baugruppe aktiv wird, sodass die Baugruppe auch im Defektfall elektrisch leitend ist. Mit der Baugruppe verbundene Anlagenteile können somit geerdet werden. Es ist also gewährleistet, dass im Defektfall der Baugruppe stets ein Kurzschluss vorliegt, sodass voneinander getrennte Anlagenteile einer Anlage über die Baugruppe kurzgeschlossen sind, wodurch diese entsprechend geerdet sind.

Die Defektanzeige stellt zudem sicher, dass der Defektfall, der mit dem Auslösefall der Kurzschlussvorrichtung einhergeht, angezeigt wird, sodass ein Nutzer den Zustand der Baugruppe, insbesondere den der Kurzschlussvorrichtung, schnell erfassen kann.

Die Kurzschlussvorrichtung ist unter anderem dazu eingerichtet, bei hoher kurzzeitiger Überlast aktiv zu werden, also einen Kurzschluss zu erzeugen. Eine derartige hohe kurzzeitige Überlast hat beispielsweise zur Folge, dass der Grundkörper des Gasableiters beschädigt oder zerstört wird, wodurch die Kurzschlussvorrichtung aktiviert wird und einen Kurzschluss herstellt.

Über die thermisch lösbare Verbindung ist zudem sichergestellt, dass die Baugruppe auch bei einer langandauernden, niedrigen Überlast einen Potenzialausgleich gewährleisten kann, da die thermisch lösbare Verbindung sich aufgrund der langandauernden, niedrigen Überlast löst. Wenn die thermisch lösbare Verbindung sich löst, wird ebenfalls ein Kurzschluss erzeugt, wodurch der Potenzialausgleich entsprechend sichergestellt ist.

Die Kurzschlussvorrichtung umfasst demnach neben der Feder und dem Betätigungselement auch die thermisch lösbare Verbindung, da beim Lösen der thermisch lösbaren Verbindung ebenfalls ein Kurzschluss erzeugt wird.

Die erfindungsgemäße Baugruppe, insbesondere die Kurzschlussvorrichtung, umfasst somit einen kombinierten Auslösemechanismus, der sowohl bei einer hohen, kurzzeitigen Überlast als auch bei einer langandauernden, niedrigen Überlast reagiert, um den Potenzialausgleich sicherzustellen.

Grundsätzlich wird der Auslösemechanismus dadurch erreicht, dass die Feder das Betätigungselement (mittelbar oder unmittelbar) in die entsprechende Kurzschlussstellung vorspannt, in der ein Kurzschluss erzeugt wird. Demnach erzeugt das Betätigungselement den Kurzschluss, wenn der Grundkörper beschädigt oder zerstört worden ist und/oder die thermisch lösbare Verbindung sich gelöst hat.

Die Kurzschlussvorrichtung stellt demnach sicher, dass auch im Defektfall der Baugruppe ein Kurzschluss vorliegt, insbesondere der Gasableiter kurzgeschlossen wird.

Insofern sind mehrere unterschiedliche Defektszenarien von der Baugruppe abgedeckt, insbesondere von der Kurzschlussvorrichtung, nämlich eine kurzzeitig hohe Überlast sowie eine niedrige Langzeitüberlast.

Darüber hinaus stellt der Gasableiter sicher, dass die Baugruppe den gewünschten Potenzialausgleich sicherstellt, sofern eine Potenzialdifferenz vorliegt, die von dem Gasableiter abgeleitet werden kann, was dem regulären Betrieb der Baugruppe entspricht, also eine reguläre Überlast.

Grundsätzlich stellt der Gasableiter eine Trennfunkenstrecke (EXFS) bereit.

Ein Aspekt sieht vor, dass das Betätigungselement relativ zum Außengehäuse beweglich gelagert ist. Das Betätigungselement kann sich demnach relativ zum Außengehäuse bewegen, wodurch über das Betätigungselement der Kurzschluss erzeugt werden kann, da die relative Bewegung einen Kontakt zwischen zwei Komponenten der Baugruppe zur Folge haben kann, über die der Kurzschluss erzeugt wird.

Sofern das Betätigungselement wenigstens in der Kurzschlussstellung bzw. im Auslösefall teilweise aus dem Außengehäuse ragt oder das Außengehäuse ein entsprechendes Sichtfenster hat, kann ein Nutzer schnell feststellen, ob sich das Betätigungselement in der Kurzschlussstellung befindet oder nicht. Insofern kann das Betätigungselement selbst bereits die Defektanzeige ausbilden.

Ein weiterer Aspekt sieht vor, dass das Betätigungselement mit einem zweiten Anschlussteil verbunden ist, insbesondere verschraubt ist. Das zweite Anschlussteil ist im Wesentlichen entgegengesetzt zum ersten Anschlussteil vorgesehen, insbesondere in Bezug auf den Gasableiter. Folglich ist ein erstes Ende des Gasableiters mit dem ersten Anschlussteil verbunden, wohingegen ein zweites, dem ersten Ende entgegengesetztes Ende des Gasableiters mit dem zweiten Anschlussteil verbunden ist. Mit anderen Worten sind die beiden Anschlussteile voneinander getrennt und nur über den Gasableiter miteinander gekoppelt. Die beiden Anschlussteile sind demnach nicht direkt miteinander verbunden, sodass grundsätzlich eine relative Bewegung zwischen den beiden Anschlussteilen möglich ist, sofern die Verbindung zum Gasableiter unterbrochen und/oder der Gasableiter beschädigt ist.

Das erste Anschlussteil und das zweite Anschlussteil sind demnach in einer Ausgangsstellung der Baugruppe voneinander beabstandet, nämlich durch den dazwischenliegenden Gasableiter.

In einer Ausgestaltung hat das Betätigungselement zumindest einen ringförmigen oder zylindrischen Abschnitt. Beispielsweise ist das Betätigungselement (im Wesentlichen) topfförmig ausgebildet, wobei der Boden eine Öffnung aufweist.

Der entsprechende Abschnitt des Betätigungselements kann endseitig ein Innengewinde aufweisen, mit dem ein Außengewinde des zweiten Anschlussteils zusammenwirkt, um eine Gewindeverbindung zwischen dem Betätigungselement und dem zweiten Anschlussteil auszubilden.

Insbesondere ist vorgesehen, dass die wenigstens eine Feder das zweite Anschlussteil beaufschlagt. Insofern ist das Betätigungselement über das zweite Anschlussteil in die Kurzschlussstellung vorgespannt. Die Feder drückt das zweite Anschlussteil in Richtung der Kurzschlussstellung, wobei das zweite Anschlussteil, welches mit dem Betätigungselement verbunden ist, das Betätigungselement in Richtung der Kurzschlussstellung beaufschlagt, beispielsweise zieht. Insgesamt spannt die Feder somit das Betätigungselement in die Kurzschlussstellung vor.

Beispielsweise ist die wenigstens eine Feder eine Druckfeder. Die Druckfeder stützt sich demnach an einer Komponente der Baugruppe ab, um einen Druck auf das zweite Anschlussteil auszuüben.

Ferner kann vorgesehen sein, dass die Kurzschlussvorrichtung eine Druckfeder und/oder eine Drehfeder umfasst. Folglich können zwei unterschiedliche Federarten vorgesehen sein, die sicherstellen, dass eine gewünschte Bewegung des Betätigungselements erfolgt, wenn ein Defekt der Baugruppe vorliegt. Auch kann ausschließlich eine Drehfeder vorgesehen sein, die eine Verdrehung des Betätigungselements zur Folge hat, welche nur dann möglich ist, wenn beispielsweise der Gasableiter, insbesondere dessen Grundkörper, beschädigt oder zerstört ist. Mit anderen Worten kann die Drehfeder so angeordnet sein, dass eine Verdrehung des Betätigungselements erfolgt, wobei diese Verdrehung erst dann möglich ist, wenn der Gasableiter, insbesondere dessen Grundkörper, beschädigt oder zerstört ist. Die Bewegung des Betätigungselements hat einen Kurzschluss zur Folge. Insbesondere wird die Bewegung des Betätigungselements aufgrund einer kurzzeitig hohen Überlast bzw. einer Langzeitüberlast initiiert, wodurch die Kurzschlussvorrichtung auslöst.

Grundsätzlich kann die Druckfeder auch dafür sorgen, dass ein auftretender Riss des Gasableiters, insbesondere im Grundkörper des Gasableiters, einen Bruch des Gasableiters zur Folge hat, insbesondere des Grundkörpers, sodass wenigstens zwei Teile vorliegen, die voneinander getrennt sind. Anschließend kann die Drehfeder die wenigstens zwei Teile relativ zueinander verdrehen. Die von der Druckfeder ausgeübte Kraft sorgt also dafür, dass eine Schwächung des Gasableiters, insbesondere des Grundkörpers, aufgrund eines Risses zu einem Bruch führt. Bereits bei einem Riss kann die Funktionsfähigkeit nicht mehr vollständig gewährleistet sein, sodass eine vollständige Zerstörung und Auslösen der Kurzschlussvorrichtung von Vorteil ist.

Ein weiterer Aspekt sieht vor, dass im Auslösefall der Kurzschlussvorrichtung ein Kurzschluss über das erste Anschlussteil (Innengehäuse) und das Betätigungselement ausgebildet ist, die sich im Auslösefall kontaktieren. Im Auslösefall, also wenn sich das Betätigungselement in der Kurzschlussstellung befindet, liegt demnach ein Kontakt zwischen dem Betätigungselement und dem ersten Anschlussteil vor, wodurch der Kurzschluss hergestellt wird. Dies liegt unter anderem daran, dass das Außengehäuse fest mit dem ersten Anschlussteil verbunden ist und das Betätigungselement mit dem zweiten Anschlussteil verbunden ist. Beim Auslösen der Kurzschlussvorrichtung findet eine Relativbewegung des Betätigungselements zum Außengehäuse statt, was demnach auch eine Relativbewegung der beiden Anschlussteile zur Folge hat. Dennoch liegt im Auslösefall kein direkter Kontakt zwischen den beiden Anschlussteilen vor, sondern lediglich ein mittelbarer Kontakt über das Betätigungselement. Mit anderen Worten sind die beiden Anschlussteile, die im Ausgangszustand voneinander beabstandet und elektrisch isoliert sind, im Auslösefall zwar weiterhin voneinander beabstandet, aber über das Betätigungselement miteinander elektrisch verbunden. Ein Strom kann somit vom ersten Anschlussteil über das Betätigungselement zum zweiten Anschlussteil fließen.

Insbesondere ist die Defektanzeige als mechanische Defektanzeige ausgebildet. Dies bedeutet, dass die Defektanzeige im Auslösefall rein mechanisch ausgelöst wird, also kein elektrisches Signal zur Defektanzeige geleitet wird. Hierzu kann in einfacher Weise vorgesehen sein, dass die Defektanzeige als Teil des Betätigungselements ausgebildet ist oder direkt mechanisch mit dem Betätigungselement gekoppelt ist, wodurch eine Verlagerung des Betätigungselements eine Verlagerung der Defektanzeige zur Folge hat, wodurch der entsprechende Zustand für den Nutzer sichtbar wird.

Beispielsweise ist die Defektanzeige an einer nach außen gewandten Oberfläche des Betätigungselements vorgesehen, die im Auslösefall von außen sichtbar ist. Die Oberfläche kann ein markierter Abschnitt sein, welcher in der Kurzschlussstellung von außen sichtbar wird. Beispielsweise ist der Abschnitt mit einer Signalfarbe markiert. Dieser entsprechende Abschnitt, der die Defektanzeige ausbildet, ist demnach in der Ausgangsstellung von dem Außengehäuse verdeckt, wobei der entsprechende Abschnitt in der Kurzschlussstellung von außen sichtbar wird, sodass ein Nutzer direkt den Zustand der Kurzschlussvorrichtung und somit den Zustand der Baugruppe erfassen kann. Hierzu kann vorgesehen sein, dass die Relativbewegung des Betätigungselements zum Außengehäuse zur Folge hat, dass der markierte Abschnitt aus dem Außengehäuse austritt. Alternativ kann ein Sichtfenster im Außengehäuse vorgesehen sein, bspw. ein durchsichtiger bzw. transparenter Bereich, in dem der markierte Abschnitt im Auslösefall positioniert ist, sodass der markierte Abschnitt von außen durch das Sichtfenster sichtbar ist.

Mit dem Sichtfenster ist es insbesondere möglich, ein hermetisch abgedichtetes Außengehäuse bereitzustellen, in dem sich das Betätigungselement bewegen kann.

Ferner kann die Defektanzeige grundsätzlich für die Montage im Freien geeignet sein. Demnach hält die Defektanzeige den Umwelteinflüssen stand.

Das Außengehäuse und/oder die Anschlussteile sind derart ausgebildet, insbesondere abgedichtet, dass die Baugruppe einen IP-Schutzgrad hat, der das Eindringen von Wasser und Fremdkörpern sowohl im nichtausgelösten als auch im ausgelösten Zustand verhindert. Gleichzeitig wird aber die Bewegungsfähigkeit der Kurzschlussvorrichtung sichergestellt, wodurch die Kurzschlussfunktionalität im Defektfall garantiert ist.

Gemäß einem weiteren Aspekt ist das erste Anschlussteil fest mit dem Außengehäuse verbunden. Hierdurch ist sichergestellt, dass keine Relativbewegung zwischen dem ersten Anschlussteil und dem Außengehäuse erfolgt.

Ein weiterer Aspekt sieht vor, dass der Grundkörper zumindest teilweise von einem Isolationskörper umgeben ist, an dem sich die wenigstens eine Feder abstützt und/oder entlang dem das Betätigungselement beweglich gelagert ist und/oder mit dem das erste Anschlussteil fest verbunden ist. Der Isolationskörper stellt eine elektrische Isolierung zwischen dem Grundkörper des Gasableiters und dem Betätigungselement im Ausgangszustand sicher. Zudem wird das Betätigungselement über den Isolationskörper innerhalb des Außengehäuses in definierter Weise gelagert, insbesondere ein definierter Abstand zwischen dem Grundkörper des Gasableiters und dem Betätigungselement eingestellt. Gleichzeitig dient der Isolationskörper als Gleitlager für das Betätigungselement, sodass sich das Betätigungselement relativ zum Isolationskörper bewegen kann. Zudem kann die Feder zwischen dem Isolationskörper und dem zweiten Anschlussteil eingespannt sein, sodass sich die Feder am Isolationskörper abstützt und das zweite Anschlussteil in Richtung Kurzschlussstellung drückt. Ferner kann der Isolationskörper mit dem ersten Anschlussteil fest verbunden sein, sodass der Isolationskörper in Bezug auf das erste Anschlussteil und auch das Außengehäuse fest angeordnet ist, da das Außengehäuse mit dem ersten Anschlussteil verbunden ist. Für die Verbindung des Isolationskörpers und des ersten Anschlussteils kann ein Kraft- und/oder Formschluss vorgesehen sein. Darüber hinaus kann der Isolationskörper auch stoffschlüssig mit dem ersten Anschlussteil verbunden sein.

Die Baugruppe kann zudem eine Fernmeldeeinrichtung umfassen, die eingerichtet ist, den Zustand der Baugruppe zu überwachen. Insbesondere umfasst die Fernmeldeeinrichtung einen Sensor, der mit dem Außengehäuse oder dem Betätigungselement zusammenwirkt. Die Fernmeldeeinrichtung dient grundsätzlich dazu, den Status der Baugruppe auch an einem anderen Ort zu signalisieren, sodass der Nutzer nicht zwingend vor Ort sein muss, um die Defektanzeige wahrzunehmen. Die Fernmeldeeinrichtung kann einen Mikroschalter umfassen, der den Sensor darstellt. Der Mikroschalter kann mittels taktiler Betätigung den Zustand der Baugruppe übermitteln. Es kann vorgesehen sein, dass der Sensor, also der Mikroschalter, mit dem Außengehäuse zusammenwirkt, insbesondere im Ausgangszustand. Der Sensor ist dabei so gelagert, dass der Sensor im Auslösefall von dem Außengehäuse wegbewegt wird, nämlich aufgrund der Bewegung des Betätigungselements, wodurch der Kontakt zum Außengehäuse nicht mehr vorliegt und ein entsprechendes Signal über die Fernmeldeeinrichtung gesendet wird.

Alternativ kann der Sensor so angeordnet sein, dass der Sensor im Ausgangszustand nicht betätigt ist, jedoch im Auslösefall, also nach der Bewegung des Betätigungselements. Die Betätigung kann durch das Betätigungselement selbst oder durch ein mit dem Betätigungselement gekoppeltes Element erfolgen, wodurch ein Auslösesignal über die Fernmeldeeinrichtung ausgesendet wird, was wiederum repräsentativ für den Zustand der Baugruppe ist.

Auch kann vorgesehen sein, dass der Sensor eine Kontur an einer bewegten Komponente der Baugruppe abtastet, bspw. dem Betätigungselement und/oder dem zweiten Anschlussteil. Die abgetastete Komponente der Baugruppe kann dabei außerhalb des Außengehäuses oder innerhalb des Außengehäuses vom Sensor abgetastet werden.

Eine weitere Alternative des Sensors sieht einen induktiven Sensor vor, der eine Bewegung einer Komponente der Baugruppe detektiert.

Die thermisch lösbare Verbindung kann eine Lötverbindung sein. Bei der thermisch lösbaren Verbindung kann es sich um eine Niedriglötpaste handeln, die sich beispielsweise ab einer Temperatur oberhalb von 100°C, insbesondere oberhalb von 130°C, zu lösen beginnt, wodurch sich die thermisch lösbare Verbindung löst.

Insbesondere kann der Grundkörper des Gasableiters aus einer Keramik gebildet sein. Die Keramik kann brechen oder reißen, wodurch es zu einem Defekt der Baugruppe kommt, insbesondere des Gasableiters. Dieses Brechen bzw. Reißen des Grundkörpers hat zur Folge, dass die Kurzschlussvorrichtung aktiviert wird, wodurch ein Potenzialausgleich über die kurzgeschlossene Baugruppe gewährleistet ist.

Insbesondere ist das Außengehäuse ein Kunststoffgehäuse. Hierdurch ist sichergestellt, dass das außenliegende Außengehäuse, das elektrisch leitende Komponenten umgibt, elektrisch nichtleitend ist.

Grundsätzlich liegt der Auslösefall der Baugruppe dann vor, wenn die Kurzschlussvorrichtung aktiviert wurde, also das Betätigungselement in seiner Kurzschlussstellung ist, in der der Kurzschluss über das Betätigungselement hergestellt ist.

Die Kurzschlussvorrichtung kann einen axialen, einen rotatorischen bzw. einen axialen und rotatorischen Auslösemechanismus aufweisen, nämlich aufgrund einer Druckfeder, einer Drehfeder bzw. einer Kombination von Druck- und Drehfeder. Die Achse wird dabei durch den Gasableiter definiert bzw. die Verbindungslinie der Anschlüsse des Gasableiters.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine Schnittdarstellung durch eine erfindungsgemäße Baugruppe gemäß einer Ausführungsform in einem Ausgangszustand,
- Figur 2 die Schnittansicht der Figur 1 in einem Auslösefall,
- Figur 3 eine Perspektivansicht der Figur 2,
- Figur 4 eine Darstellung einer erfindungsgemäßen Baugruppe gemäß einer zweiten Ausführungsform,
- Figur 5 eine schematische Längsschnittdarstellung einer erfindungsgemäßen Baugruppe gemäß einer dritten Ausführungsform,
- Figur 6 eine schematische Querschnittdarstellung der Baugruppe gemäß Figur 5 in ihrem Ausgangszustand, die das Wirkprinzip verdeutlicht, und
- Figur 7 die schematische Querschnittdarstellung der Figur 6 im Auslösefall.

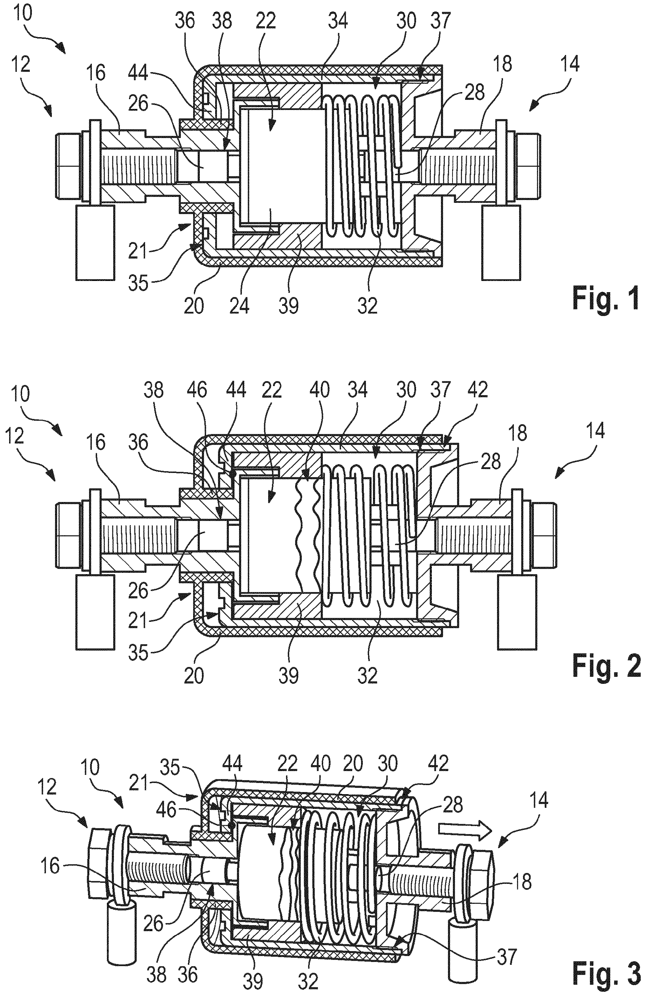

In Figur 1 ist eine Baugruppe 10 für den Potenzialausgleich in explosionsgefährdeten Bereichen (Ex-Bereiche) gezeigt, die beispielsweise verwendet wird, um betriebsmäßig getrennte Anlagenteile einer Anlage bei Blitzeinwirkung indirekt zu verbinden bzw. zu erden.

Die Baugruppe 10 umfasst einen ersten Pol 12, der beispielsweise anlagenseitig ist, sowie einen entgegengesetzten zweiten Pol 14, der beispielsweise feldseitig ist.

An den Polen 12, 14 können jeweils eine Anschluss-Gewindeschraube M10 vorgesehen sein, worüber entsprechende Anlageteile der Anlage mit der Baugruppe 10 elektrisch angebunden werden.

Zudem umfasst die Baugruppe 10 ein erstes Anschlussteil 16, welches dem ersten Pol 12 zugeordnet bzw. mit diesem verbunden ist, sowie ein zweites Anschlussteil 18, welches dem zweiten Pol 14 zugeordnet bzw. mit diesem verbunden ist.

Die Anschlussteile 16, 18 erstrecken sich zumindest teilweise in einem Außengehäuse 20, welches als ein Kunststoffgehäuse (TPE-Gehäuse) ausgebildet ist, beispielsweise als ein Spritzgussteil. Das erste Anschlussteil 16 sowie das zweite Anschlussteil 18 sind dagegen als elektrisch leitfähige Teile ausgebildet, beispielsweise Metallgehäuseteile. Insbesondere ist das Außengehäuse 20 mit dem ersten Anschlussteil 16 fest verbunden.

Das Außengehäuse 20 ist in der gezeigten Ausführungsform (im Wesentlichen) topfförmig ausgebildet, wobei ein Boden 21 des topfförmigen Außengehäuses 20 eine Öffnung hat, durch die sich das erste Anschlussteil 16 erstreckt. Das zweite Anschlussteil 18 entspricht einem Deckel für das topfförmige Außengehäuse 20.

Zwischen den beiden Anschlussteilen 16, 18 ist ein Gasableiter 22 vorgesehen, der die beiden Anschlussteile 16, 18 demnach voneinander beabstandet. Der Gasableiter 22 ist vollständig in dem Außengehäuse 20 aufgenommen, wohingegen die beiden Anschlussteilen 16, 18 in der gezeigten Ausführungsform nur teilweise im Außengehäuse 20 aufgenommen sind.

Der Gasableiter 22 weist einen Grundkörper 24 auf, der einen mit Gas gefüllten Bereich umschließt. Der Grundkörper 24 kann aus einer Keramik gebildet sein.

Der Gasableiter 22 hat ein erstes Ende 26, über das der Gasableiter 22 mit dem ersten Anschlussteil 16 verbunden ist, sowie ein zweites, zum ersten Ende 26 entgegengesetztes Ende 28, über das der Gasableiter 22 mit dem zweiten Anschlussteil 18 verbunden ist.

Insofern kann die Baugruppe 10 eine elektrisch leitende Verbindung über das erste Anschlussteil 16, den damit verbundenen Gasableiter 22 sowie das zweite Anschlussteil 18 ausbilden, das ebenfalls mit dem Gasableiter 22 verbunden ist. Die elektrisch leitende Verbindung liegt dann vor, wenn der Gasableiter 22 in einem leitfähigen Zustand ist.

Darüber hinaus umfasst die Baugruppe 10 eine Kurzschlussvorrichtung 30, die sicherstellt, dass ein Kurzschluss zwischen den ansonsten räumlich getrennten Anschlussteilen 16, 18 vorliegt, wenn die Baugruppe 10, insbesondere der Gasableiter 22, defekt ist, also ein Defektfall vorliegt.

Die Kurzschlussvorrichtung 30 umfasst eine Feder 32 sowie ein Betätigungselement 34, das von der Feder 32 in eine Kurzschlussstellung vorgespannt ist, wie nachfolgend noch erläutert wird.

Das Außengehäuse 20 umgibt im Ausgangszustand das Betätigungselement 34, das ebenfalls (im Wesentlichen) topfförmig ausgebildet ist, wobei ein Boden 35 des Betätigungselements 34 eine Öffnung hat, durch die sich das erste Anschlussteil 16 erstreckt.

Ferner hat das topfförmige Außengehäuse 20 im Bereich seiner Öffnung im Boden 21 eine Führung 36 für den Rand der Öffnung im Boden 35 des Betätigungselements 34.

Das Betätigungselement 34 ist zudem mit dem zweiten Anschlussteil 18 verbunden, beispielsweise über eine Gewindeverbindung 37, sodass das zweite Anschlussteil 18 und das Betätigungselement 34 mechanisch miteinander gekoppelt sind. Eine Bewegung des zweite Anschlussteils 18 hat somit eine Bewegung des Betätigungselements 34 zur Folge und umgekehrt.

Die Kurzschlussvorrichtung 30 weist zudem wenigstens eine thermisch lösbare Verbindung 38 auf, über die der Grundkörper 24 des Gasableiters 22 beispielsweise mit dem ersten Anschlussteil 16 verbunden ist. Insofern kann die thermisch lösbare Verbindung 38 im Bereich des ersten Endes 26 des Gasableiters 22 vorgesehen sein.

Grundsätzlich kann die thermisch lösbare Verbindung 38 an allen Kontaktflächen zwischen dem Gasableiter 22 und dem ersten Anschlussteil 16 vorgesehen sein.

Beispielsweise ist der Gasableiter 22 über sein erstes Ende 26 in das erste Anschlussteil 16 eingelötet, insbesondere mit einer Niedriglotpaste.

Darüber hinaus umfasst die Baugruppe 10 einen Isolationskörper 39, der den Gasableiter 22, insbesondere den Grundkörper 24, zumindest teilweise umgibt. Der Isolationskörper 39 kann auf den Gasableiter 22 aufgeschoben worden sein.

Wie in Figur 1 gezeigt ist der Isolationskörper 39 derart geformt, dass er einen Teil des ersten Anschlussteils 16 kontaktiert, insbesondere umschließt. Es kann auch vorgesehen sein, dass eine Verbindung zwischen dem Isolationskörper 39 und dem ersten Anschlussteil 16 vorliegt, wodurch eine Relativbewegung des Isolationskörpers 39 zum ersten Anschlussteil 16 unterbunden werden kann.

Der Isolationskörper 39 ist zudem zwischen dem Gasableiter 22 und dem Betätigungselement 34 vorgesehen, sodass der Isolationskörper 39 die Position des Betätigungselements 34 im Außengehäuse 20 festlegt und gleichzeitig als ein Gleitlager für das Betätigungselement 34 fungiert, wenn die Kurzschlussvorrichtung 30 auslöst.

In den Figuren 2 und 3 ist der Auslösefall der Kurzschlussvorrichtung 30 gezeigt, der im Defektfall der Baugruppe 10 eintritt.

In dem gezeigten Beispiel ist der Grundkörper 24 beschädigt bzw. zerstört worden, da eine entsprechende Bruchstelle 40 vorliegt.

Die Beschädigung bzw. Zerstörung des Grundkörpers 24 hat zur Folge, dass die Druckfeder 32, die sich am Isolationskörper 39 abstützt, das zweite Anschlussteil 18 und somit das mit dem zweiten Anschlussteil 18 verbundene Betätigungselement 34 relativ zum Außengehäuse 20 bewegt.

Hierdurch wird ein Bereich des Betätigungselements 34 sichtbar, der als Defektanzeige 42 fungiert. Die Defektanzeige 42 ist demnach an einer nach außen gewandten Oberfläche des Betätigungselements 34 vorgesehen, die im Auslösefall von außen sichtbar ist, da diese in der gezeigten Ausführungsform aus dem Außengehäuse 20 seitlich hervortritt. Daher handelt es sich um eine mechanische Defektanzeige 42, da diese aufgrund eines Mechanismus sichtbar wird.

Insbesondere geht aus Figur 3 hervor, dass die Defektanzeige 42 hervorgehoben sein kann, beispielsweise farblich als roter Abschnitt, wodurch der Zustand der Baugruppe 10 schnell erfasst werden kann, da es sich um eine Signalfarbe handelt. Auch kann die Defektanzeige 42 durch ein Symbol oder ähnliches an der nach außen gewandten Oberfläche des Betätigungselements 34 ausgebildet sein.

Grundsätzlich kann es sich bei der Defektanzeige 42 also um einen markierten Abschnitt des Betätigungselements 34 handeln.

Die relative Bewegung des Betätigungselements 34 in Bezug auf das Außengehäuse 20 hat ferner zur Folge, dass das Betätigungselement 34 mit einem Kurzschlussabschnitt 44 das erste Anschlussteil 16 kontaktiert, sodass ein Kurzschluss 46 zwischen dem ersten Anschlussteil 16 und dem Betätigungselement 34 vorliegt, welches mit dem zweiten Anschlussteil 18 fest verbunden ist. Der Kurzschlussabschnitt 44 ist insbesondere am Boden 35 des topfförmigen Betätigungselements 34 ausgebildet.

Insofern sind die beiden Anschlussteile 16, 18 im Auslösefall über das Betätigungselement 34, insbesondere dessen Kurzschlussabschnitt 44, elektrisch miteinander verbunden, wodurch ein Potenzialausgleich auch im Defektfall der Baugruppe 10 gewährleistet ist.

Das Zerstören bzw. Brechen des Grundkörpers 24 ist typischerweise durch eine kurzzeitige hohe Überlast bedingt, die auf die Baugruppe 10 wirkt. Die Bruchstelle 40 kann grundsätzlich an jeder Stelle des Gasableiters 22 auftreten, also auch am ersten Ende 26 oder am zweiten Ende 28 oder an einer anderen Stelle des Grundkörpers 24. In jedem dieser Fälle wird eine Bewegung des zweiten Anschlussteils 18 und des damit verbundenen Betätigungselements 34 relativ zum ersten Anschlussteil 16 ermöglicht.

Neben diesem Defektszenario umfasst die Kurzschlussvorrichtung 30 ein weiteres Defektszenario, aufgrund dessen die Baugruppe 10 auslöst, insbesondere die Kurzschlussvorrichtung 30, nämlich eine Langzeitüberlast.

Die Langzeitüberlast hat zur Folge, dass sich die thermisch lösbare Verbindung 38 löst, wodurch der Gasableiter 22 über sein erstes Ende 26 nicht mehr fest mit dem ersten Anschlussteil 16 gekoppelt ist.

Die Feder 32, die sich an dem Isolationskörper 39 abstützt, drückt somit das zweite Anschlussteil 18 in Richtung der Auslösestellung, wodurch sowohl das Betätigungselement 34, das fest mit dem zweiten Anschlussteil 18 verbunden ist, als auch der gesamte Gasableiter 22 bewegt werden. Dies ist möglich, da der Gasableiter 22 über sein erstes Ende 26 nicht mehr mit dem ersten Anschlussteil 16 verbunden ist, da die thermisch lösbare Verbindung 38 aufgrund des dauerhaften Stromflusses und dem damit einhergehenden Temperaturanstieg gelöst wurde.

Demnach wird die Defektanzeige 42 auch in diesem Defektszenario von außen sichtbar, wodurch der Nutzer schnell feststellen kann, wie der Zustand der Baugruppe 10 ist.

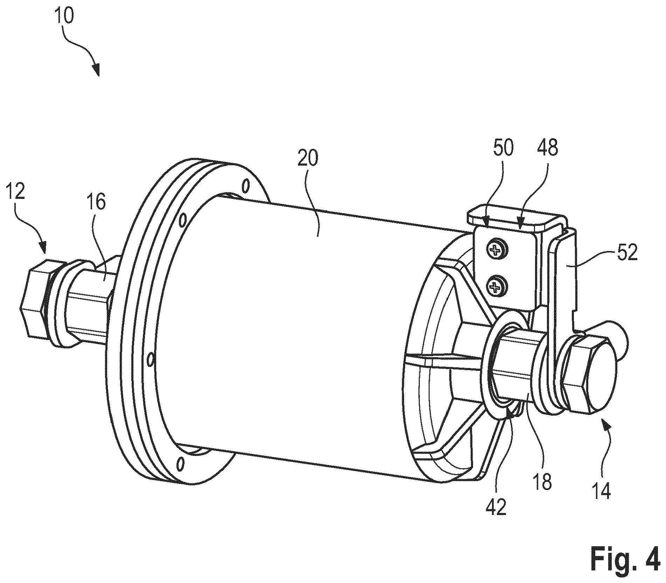

In Figur 4 ist eine weitere Ausführungsform gezeigt, bei der die Baugruppe 10 eine Fernmeldeeinrichtung 48 aufweist, die einen Sensor 50 umfasst, beispielsweise einen Mikro-Schalter.

Der Sensor 50 ist dem zweiten Pol 14 der Baugruppe 10 zugeordnet, beispielsweise dem feldseitigen Pol der Baugruppe 10.

Im gezeigten Ausführungsbeispiel wirkt der Sensor 50 sowohl mit dem Außengehäuse 20 als auch mit dem zweiten Anschlussteil 18 zusammen, an dem eine Haltevorrichtung 52 für den Sensor 50 vorgesehen ist.

Der Sensor 50 ist derart angeordnet, dass er dauerhaft im geschalteten bzw. betätigten Zustand ist. Im Auslösefall der Kurzschlussvorrichtung 30 bewegt sich das zweite Anschlussteil 18 aufgrund der Relativbewegung bezüglich des Außengehäuses 20 in die Auslösestellung, wie zuvor beschrieben, wodurch die Haltevorrichtung 52 und der daran angeordnete Sensor 50 mitbewegt wird. Der Sensor 50 ist dann nicht mehr vom Außengehäuse 20 betätigt, wodurch die Fernmeldeeinrichtung 48 ein anderes Signal oder kein Signal mehr ausgibt. In jedem Fall liegt eine Signalveränderung vor, die auf eine Zustandsänderung der Baugruppe 10 zurückzuführen ist.

Alternativ kann vorgesehen sein, dass der Sensor 50 derart angeordnet ist, dass der Sensor 50 erst bei einer Relativbewegung betätigt bzw. ausgelöst wird. Die Relativbewegung hat zur Folge, dass eine mechanische Betätigung des Sensors 50 erfolgt, was eine Zustandsänderung der Baugruppe 10 signalisiert.

Außerdem kann die Fernmeldeeinrichtung 48 einen induktiven Sensor 50 aufweisen, der eine Bewegung einer Komponente der Baugruppe 10 nicht mechanisch feststellt.

Neben der Fernmeldeeinrichtung 48 umfasst die zweite Ausführungsform auch die Defektanzeige 42, da sich der zweite Pol 14 im Auslösefall relativ zum Außengehäuse 20 bewegt, sodass die Defektanzeige 42 sichtbar wird, wie dies zuvor für die erste Ausführungsform schon beschrieben wurde.

Grundsätzlich kann die Fernmeldeeinrichtung 48 auch bei der ersten Ausführungsform implementiert sein.

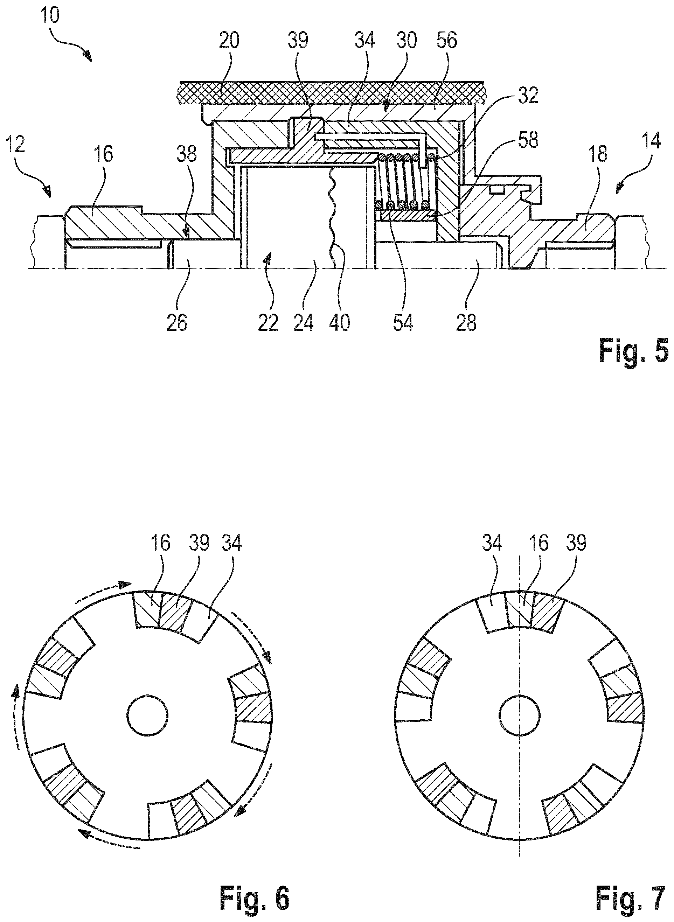

In den Figuren 5 bis 7 ist eine dritte Ausführungsform der Baugruppe 10 gezeigt, die sich von der in Figur 1 gezeigten Ausführungsform dahingehend unterscheidet, dass die Kurzschlussvorrichtung 30 neben der Druckfeder 32 noch eine Drehfeder 54 aufweist, die eine Drehung des Betätigungselements 34 bewirkt, wodurch der Kurzschluss zwischen dem Betätigungselement 34 und dem ersten Anschlussteil 16 hergestellt wird, wie aus einem Vergleich der Figuren 6 und 7 hervorgeht.

Der grundsätzliche Aufbau ist demnach zunächst ähnlich zu der ersten Ausführungsform, die in den Figuren 1 bis 3 gezeigt ist, da im Auslösefall die Druckfeder 32 eine Relativbewegung des Betätigungselements 34 zum Außengehäuse 20 und dem damit fest verbundenen ersten Anschlussteil 16 in axialer Richtung ermöglicht.

Sobald das Betätigungselement 34 in axialer Richtung weit genug bewegt worden ist, wird die Drehfeder 54 aktiv, wodurch eine Drehbewegung des Betätigungselements 34 initiiert wird, die zur Folge hat, dass das Betätigungselement 34 an dem ersten Anschlussteil 16 anliegt, und somit den Kurzschluss herstellt.

Auch kann die Druckfeder 32 dazu vorgesehen sein, dass der Gasableiter 22, insbesondere dessen Grundkörper 24, separiert wird, sofern bisher nur eine Schwächung vorlag. Die von der Druckfeder 32 ausgeübte Kraft sorgt also dafür, dass eine vorliegende Schwächung, beispielsweise ein Riss im Grundkörper 24, zu einer Trennung des Grundkörpers 24 führt. Hierdurch ist sichergestellt, dass anschließend die Verdrehung mittels der Drehfeder 54 erfolgen kann.

Die entsprechende Drehbewegung des Betätigungselements 34 ist in Figur 6 durch die gestrichelten Pfeile angedeutet, wohingegen in Figur 7 die Kurzschlussstellung des Betätigungselements 34 gezeigt ist, also wenn der Kurzschluss hergestellt ist, da sich das Betätigungselement 34 und das erste Anschlussteil 16 kontaktieren.

Zudem umfasst die dritte Ausführungsform der Baugruppe 10 ein Fixierungsmantelteil 56, das zwischen dem Außengehäuse 20 und dem ersten Anschlussteil 16, dem Isolationskörper 39, dem Betätigungselement 34 und dem zweiten Anschlussteil 18 vorgesehen ist.

Darüber hinaus ist an dem Gasableiter 22 eine Lagerhülse 58 vorgesehen, die zur Lagerung der Drehfeder 54 dient.

In der Ausführungsform kann ein Sichtfenster im Fixierungsmantelteil 56 und/oder im Außengehäuse 20 vorgesehen sein, über das die Defektanzeige 42 im Auslösefall von außen sichtbar ist. Mit anderen Worten hat die Rotationsbewegung des Betätigungselements 34 zur Folge, dass die Defektanzeige 42 von außen sichtbar ist.

Alternativ kann auch eine Ausführungsvariante vorgesehen sein, bei der lediglich die Drehfeder 54 vorliegt. Sobald eine Trennung des Gasableiters 22 aufgrund einer Beschädigung vorliegt, kann eine Relativdrehung durch die Drehfeder 54 initiiert werden, was zum Kurzschluss führt, wie vorstehend bereits erläutert.

Alle Ausführungsformen haben demnach gemein, dass die Baugruppe 10 einen Gasableiter 22 und eine Kurzschlussvorrichtung 30 aufweist, die wenigstens eine Feder 32, 54 und ein Betätigungselement 34 umfasst, das durch die Feder 32, 54 in eine Kurzschlussstellung vorgespannt ist. Der Gasableiter 22 weist einen mit einem Gas gefüllten Grundkörper 24 auf, der über die thermisch lösbare Verbindung 38 mit dem ersten Anschlussteil 16 verbunden ist. Die Defektanzeige 42 ist eingerichtet, den Auslösefall der Kurzschlussvorrichtung 30 anzuzeigen.

Die Fernmeldeeinrichtung 48 kann in sämtlichen Ausführungsformen vorgesehen sein.

## Patentansprüche

1. Baugruppe (10) für den Potenzialausgleich in explosionsgefährdeten Bereichen, mit einem Außengehäuse (20), einem Gasableiter (22), einer Kurzschlussvorrichtung (30) und einer Defektanzeige (42), wobei zumindest der Gasableiter (22) und die Kurzschlussvorrichtung (30) in dem Außengehäuse (20) aufgenommen sind, wobei die Kurzschlussvorrichtung (30) wenigstens eine Feder (32) und ein Betätigungselement (34) umfasst, das durch die Feder (32) in eine Kurzschlussstellung vorgespannt ist, wobei der Gasableiter (22) einen mit einem Gas gefüllten Grundkörper (24) aufweist, der über eine thermisch lösbare Verbindung (38) mit einem ersten Anschlussteil (16) verbunden ist, wobei die Kurzschlussvorrichtung (30) eingerichtet ist, beim Lösen der thermisch lösbaren Verbindung infolge einer langandauernden, niedrigen Überlast oder im Defektfall der Baugruppe (10), wenn der Grundkörper (24) des Gasableiters (22) beschädigt oder zerstört wird, derart aktiv zu werden, dass im Auslösefall der Kurzschlussvorrichtung (30) ein Kurzschluss (46) über das erste Anschlussteil (16) und das Betätigungselement (34) ausgebildet ist, die sich im Auslösefall kontaktieren, und wobei die Defektanzeige (42) eingerichtet ist, einen Auslösefall der Kurzschlussvorrichtung (30) anzuzeigen.

2. Baugruppe (10) nach Anspruch 1, **dadurch gekennzeichnet, dass** das Betätigungselement (34) relativ zum Außengehäuse (20) beweglich gelagert ist.

3. Baugruppe (10) nach Anspruch 1 oder 2, **dadurch gekennzeichnet, dass** das Betätigungselement (34) mit einem zweiten Anschlussteil (18) verbunden ist, insbesondere verschraubt ist.

4. Baugruppe (10) nach Anspruch 3, **dadurch gekennzeichnet, dass** die wenigstens eine Feder (32) das zweite Anschlussteil (18) beaufschlagt.

5. Baugruppe (10) nach einem der vorhergehenden Ansprüche, **dadurch gekennzeichnet, dass** die wenigstens eine Feder (32) eine Druckfeder ist.

6. Baugruppe (10) nach einem der vorhergehenden Ansprüche, **dadurch gekennzeichnet, dass** die Kurzschlussvorrichtung (30) eine Druckfeder und eine Drehfeder (54) umfasst.

7. Baugruppe (10) nach einem der vorhergehenden Ansprüche, **dadurch gekennzeichnet, dass** die Defektanzeige (42) als mechanische Defektanzeige ausgebildet ist.

8. Baugruppe (10) nach einem der vorhergehenden Ansprüche, **dadurch gekennzeichnet, dass** die Defektanzeige (42) an einer nach außen gewandten Oberfläche des Betätigungselements (34) vorgesehen ist, die im Auslösefall von außen sichtbar ist.

9. Baugruppe (10) nach einem der vorhergehenden Ansprüche, **dadurch gekennzeichnet, dass** das erste Anschlussteil (16) fest mit dem Außengehäuse (20) verbunden ist.

10. Baugruppe (10) nach einem der vorhergehenden Ansprüche, **dadurch gekennzeichnet, dass** der Grundkörper (24) zumindest teilweise von einem Isolationskörper (39) umgeben ist, an dem sich die wenigstens eine Feder (32) abstützt und/oder entlang dem das Betätigungselement (34) beweglich gelagert ist und/oder mit dem das erste Anschlussteil (16) fest verbunden ist.

11. Baugruppe (10) nach einem der vorhergehenden Ansprüche, **dadurch gekennzeichnet, dass** die Baugruppe (10) einen Fernmeldeeinrichtung (48) umfasst, die eingerichtet ist, den Zustand der Baugruppe (10) zu überwachen, insbesondere wobei die Fernmeldeeinrichtung (48) einen Sensor (50) umfasst, der mit dem Außengehäuse (20) oder dem Betätigungselement (34) zusammenwirkt.

12. Baugruppe (10) nach einem der vorhergehenden Ansprüche, **dadurch gekennzeichnet, dass** die thermisch lösbare Verbindung (38) eine Lötverbindung ist.

13. Baugruppe (10) nach einem der vorhergehenden Ansprüche, **dadurch gekennzeichnet, dass** der Grundkörper (24) des Gasableiters (22) aus einer Keramik gebildet ist.

14. Baugruppe (10) nach einem der vorhergehenden Ansprüche, **dadurch gekennzeichnet, dass** das Außengehäuse (20) ein Kunststoffgehäuse ist.

## Claims

1. An assembly (10) for potential equalization in potentially explosive areas, having an outer housing (20), a gas discharge arrester (22), a short-circuiting device (30) and a fault indicator (42), at least the gas discharge arrester (22) and the short-circuiting device (30) being accommodated in the outer housing (20), the short-circuiting device (30) comprising at least one spring (32) and an actuating element (34), which is preloaded into a short-circuit position by the spring (32), the gas discharge arrester (22) having a base body (24) which is filled with a gas and connected to a first connecting part (16) via a thermally detachable connection (38), the short-circuiting device (30) being set up to become active when the thermally detachable connection is detached as a result of a long-lasting, low overload or in the event of a fault in the assembly (10), if the base body (24) of the gas discharge arrester (22) is damaged or destroyed, such that in the event of tripping of the short-circuiting device (30), a short circuit (46) is formed via the first connecting part (16) and the actuating element (34) which contact each other in the event of tripping, and the fault indicator (42) being set up to indicate a tripping event of the short-circuiting device (30).

2. The assembly (10) according to claim 1, **characterized in that** the actuating element (34) is mounted so as to be movable relative to the outer housing (20).

3. The assembly (10) according to claim 1 or 2, **characterized in that** the actuating element (34) is connected, in particular screwed to a second connecting part (18).

4. The assembly (10) according to claim 3, **characterized in that** the at least one spring (32) acts on the second connecting part (18).

5. The assembly (10) according to any of the preceding claims, **characterized in that** the at least one spring (32) is a compression spring.

6. The assembly (10) according to any of the preceding claims, **characterized in that** the short-circuiting device (30) comprises a compression spring and a torsion spring (54).

7. The assembly (10) according to any of the preceding claims, **characterized in that** the fault indicator (42) is designed as a mechanical fault indicator.

8. The assembly (10) according to any of the preceding claims, **characterized in that** the fault indicator (42) is provided on an outwardly facing surface of the actuating element (34), which is visible from the outside in the event of tripping.

9. The assembly (10) according to any of the preceding claims, **characterized in that** the first connecting part (16) is firmly connected to the outer housing (20).

10. The assembly (10) according to any of the preceding claims, **characterized in that** the base body (24) is at least partially surrounded by an insulating body (39), on which the at least one spring (32) is supported and/or along which the actuating element (34) is movably mounted and/or to which the first connecting part (16) is firmly connected.

11. The assembly (10) according to any of the preceding claims, **characterized in that** the assembly (10) comprises a remote signaling equipment (48) which is set up to monitor the state of the assembly (10), the remote signaling equipment (48) in particular comprising a sensor (50) which interacts with the outer housing (20) or the actuating element (34).

12. The assembly (10) according to any of the preceding claims, **characterized in that** the thermally detachable connection (38) is a soldered connection.

13. The assembly (10) according to any of the preceding claims, **characterized in that** the base body (24) of the gas discharge arrester (22) is formed from a ceramic.

14. The assembly (10) according to any of the preceding claims, **characterized in that** the outer housing (20) is a plastic housing.

## Revendications

1. Ensemble (10) destiné à l'équilibrage de potentiel dans des zones à risque d'explosion, comprenant un boîtier extérieur (20), un purgeur de gaz (22), un dispositif de court-circuit (30) et un indicateur de défaut (42), au moins le purgeur de gaz (22) et le dispositif de court-circuit (30) étant logés dans le boîtier extérieur (20), le dispositif de court-circuit (30) comprenant au moins un ressort (32) et un élément d'actionnement (34) qui est précontraint par le ressort (32) dans une position de court-circuit, le purgeur de gaz (22) comportant un corps de base (24) rempli de gaz, qui est relié par une liaison thermoséparable (38) avec une première pièce de raccordement (16), le dispositif de court-circuit (30) étant agencé pour, lors de la rupture de la liaison thermoséparable à la suite d'une surcharge faible et prolongée ou en cas de défaillance du module (10), lorsque le corps de base (24) du parafoudre à gaz (22) est endommagé ou détruit, à se déclencher de telle sorte que, lors du déclenchement du dispositif de court-circuit (30), un court-circuit (46) soit établi entre la première pièce de raccordement (16) et l'élément d'actionnement (34), qui entrent en contact lors du déclenchement, et dans lequel l'indicateur de défaut (42) est agencé pour signaler un déclenchement du dispositif de court-circuit (30).

2. Ensemble (10) selon la revendication 1, **caractérisé en ce que** l'élément d'actionnement (34) est monté de manière mobile par rapport au boîtier extérieur (20).

3. Ensemble (10) selon la revendication 1 ou 2, **caractérisé en ce que** l'élément d'actionnement (34) est relié à une deuxième pièce de raccordement (18), en particulier par vissage.

4. Ensemble (10) selon la revendication 3, **caractérisé en ce que** le au moins un ressort (32) agit sur la deuxième pièce de raccordement (18).

5. Ensemble (10) selon l'une des revendications précédentes, **caractérisé en ce que** le au moins un ressort (32) est un ressort de compression.

6. Ensemble (10) selon l'une des revendications précédentes, **caractérisé en ce que** le dispositif de court-circuit (30) comprend un ressort de compression et un ressort de torsion (54).

7. Ensemble (10) selon l'une des revendications précédentes, **caractérisé en ce que** l'indicateur de défaut (42) est conçu comme un indicateur de défaut mécanique.

8. Ensemble (10) selon l'une des revendications précédentes, **caractérisé en ce que** l'indicateur de défaut (42) est prévu sur une surface de l'élément d'actionnement (34) tournée vers l'extérieur, qui est visible de l'extérieur en cas de déclenchement.

9. Ensemble (10) selon l'une des revendications précédentes, **caractérisé en ce que** la première pièce de raccordement (16) est solidaire du boîtier extérieur (20).

10. Ensemble (10) selon l'une des revendications précédentes, **caractérisé en ce que** le corps de base (24) est au moins partiellement entouré d'un corps isolant (39) sur lequel s'appuie le ou les ressorts (32) et/ou le long duquel l'élément d'actionnement (34) est monté de manière mobile et/ou auquel la première pièce de raccordement (16) est solidement reliée.

11. Ensemble (10) selon l'une des revendications précédentes, **caractérisé en ce que** l'ensemble (10) comprend un dispositif de télésurveillance (48) qui est agencé pour surveiller l'état de l'ensemble (10), en particulier le dispositif de télésurveillance (48) comprenant un capteur (50) qui coopère avec le boîtier extérieur (20) ou l'élément d'actionnement (34).

12. Ensemble (10) selon l'une des revendications précédentes, **caractérisé en ce que** la liaison thermosoluble (38) est une liaison par soudure.

13. Ensemble (10) selon l'une des revendications précédentes, **caractérisé en ce que** le corps de base (24) du dispositif d'évacuation de gaz (22) est constitué d'une céramique.

14. Ensemble (10) selon l'une des revendications précédentes, **caractérisé en ce que** le boîtier extérieur (20) est un boîtier en matière plastique.
